Europäisches Patentamt

European Patent Office

Office européen des brevets

(11) Numéro de publication: **0 095 083**

**B1**

(12) **FASCICULE DE BREVET EUROPEEN**

(45) Date de publication du fascicule du brevet: **28.01.87**

(21) Numéro de dépôt: **83104577.8**

(22) Date de dépôt: **10.05.83**

(51) Int. Cl.⁴: **H 04 L 7/02**

(54) Circuit d'acquisition de l'horloge d'un message binaire codé en NRZ.

(30) Priorité: **17.05.82 FR 8208546**

(43) Date de publication de la demande:
**30.11.83 Bulletin 83/48**

(45) Mention de la délivrance du brevet:
**28.01.87 Bulletin 87/05**

(84) Etats contractants désignés:
**BE DE FR GB IT LU NL**

(56) Documents cités:
**EP-A-0 020 205**
**FR-A-2 283 592**
**US-A-3 851 101**

**1968 IEEE INTERNATIONAL CONFERENCE ON
COMMUNICATIONS, CONFERENCE RECORD,
vol. IV, IEEE Cat. no. 68C20-COM, 1968, pages
776-781, IEEE, New York, USA, R.L.**

**HORLACHER et al.: "Voiceband four-phase
data set for global communication"**

(73) Titulaire: **SINTRA-ALCATEL Société Anonyme
dite:**
**26, rue Malakoff B.P. 245**
**F-92600 Asnieres Cedex (FR)**

(72) Inventeur: **Pivon, Claude**
**5, rue de l'Eglise**
**F-91700 Ste Genevieve des Bois (FR)**
Inventeur: **Depriester, Georges**
**4-6, rue Villa Franca**
**F-75015 Paris (FR)**

(74) Mandataire: **Weinmiller, Jürgen et al**
**Lennéstrasse 9**
**D-8133 Feldafing (DE)**

Courier Press, Leamington Spa, England.

**Description**

La présente invention est du domaine des transmissions numériques et concerne la récupération de l'horloge définissant les intervalles de temps entre lesquels se situent toutes les transitions d'un message binaire codé en NRZ.

Il existe de nombreux circuits pour l'acquisition de l'horloge d'un message binaire codé en NRZ. ceux-ci comportent, en règle générale, une horloge locale, à la fréquence de l'horloge du message binaire codé en NRZ attendu, munie d'une boucle à verrouillage de phase tendant à faire coïncider les transitions du message binaire avec ses débuts de période. La boucle est formée d'un dispositif de réglage de phase de l'horloge locale commandé par un comparateur qui détecte la position des transitions du message binaire codé en NRZ par rapport aux débuts des périodes de l'horloge locale. Des filtres plus au moins sophistiqués sont intercalés entre le comparateur et le dispositif de réglage de phase afin d'obtenir un temps d'acquisition très bref et une grande insensibilité aux parasites.

On trouvera un exemple de réalisation de ces circuits dans la description du brevet US 3,851,101.

La capacité d'acquisition de l'horloge d'un message binaire est une caractéristique importante, notamment dans le cas où les messages binaires codés en NRZ se présentent sous forme de trains asynchrones et où tout retard d'acquisition d'horloge peut conduire soit à une perte de données soit à la nécessité de recourir à une mémoire tampon d'une capacité prohibitive. Or elle est contrariée par l'existence, pour l'asservissement de phase de l'horloge locale, d'une position d'équilibre instable qui correspond à une horloge locale en opposition de phase avec celle du message reçu et dans laquelle l'asservissement peut être maintenu un certain temps par une succession de corrections alternées d'avance et de retard de phase.

Dans la plupart des circuits d'acquisiton d'horloge de l'art antérieur, l'élimination de la position d'équilibre instable de leur asservissement de phase résulte d'une détection consistant à vérifier qu'il n'existe pas, dans le message reçu, de transition dans le voisinage du milieu des périodes de l'horloge locale et, dans le cas contraire, d'une correction brutale de phase provoquant le décrochage de l'asservissement de phase de sa position de faux équilibre.

En pratique, il est nécessaire de tenir compte du bruit et, par conséquent, d'attendre la détection de plusieurs transitions du messages reçu en quasi opposition de phase avec l'horloge locale pour ne décider, qu'à coup sûr, le décrochement de la boucle d'asservissement de phase. Il en résulte une probabilité faible, mais non négligeable d'avoir une durée d'acquisition d'horloge très importante conduisant à une perte du début du message reçu.

Pour éviter ce risque certains circuits de l'art antérieur procédent de manière systématique à un essai de la stabilité du premier équilibre atteint en appliquant un déphasage brusque à l'horloge locale. Mais cela se fait au détriment de la durée moyenne d'acquisition d'horloge qui est pratiquement doublée.

La présente invention a pour but de réduire le temps d'acquisition de l'horloge d'un message codé en NRZ en évitant au départ d'une procédure d'acquisition la possibilité d'atteindre au faux équilibre pour l'asservissement de phase de l'horloge locale cela, grâce à un préréglage de la phase de l'horloge locale sur une estimation préalable plus ou moins grossière de la phase de l'horloge du message reçu effectuée alors que ce dernier transite dans une ligne à retard.

Elle a pour objet un circuit d'acquisition de l'horloge d'un message binaire codé en NRZ comprenant des moyens de cadencement engendrant un signal de cadencement ayant une fréquence égale à un multiple p de celle de l'horloge du message binaire et définissant des fenêtres temporelles successives de même durée, des moyens de comptabilisation opérant sur les transitions du signal reçu depuis plusieurs périodes d'horloge, des moyens de détection de maximum opérant sur les comptes obtenus, caractérisé en ce que les moyens de comptabilisation regroupent les fenêtres temporelles par classes en fonction de leur rang modulo p par rapport à une origine arbitraire et déterminent au cours de chaque fenêtre temporelle le compte des transitions ayant coïncidé avec des fenêtres antérieures de même classe modulo p que la fenêtre temporelle en cours, et les moyens de détection de maximum délivrent un signal d'initialisation au cours des fenêtres temporelles appartenant à la classe modulo p ayant le compte maximum, le circuit comprenant en outre une horloge locale à la fréquence d'horloge du message reçu, synchronisée au départ d'une procédure d'acquisition par les moyens de détection de maximum.

Elle a également pour objet un circuit d'acquisition de l'horloge de cadencement d'un message binaire codé en NRZ comprenant des moyens de cadencement ayant une fréquence égale à un multiple p de celle de l'horloge du message binaire et définissant des fenêtres temporelles successives de même durée, des moyens de recensement opérant sur les transitions du message reçu depuis plusieurs périodes d'horloge, des moyens de détection de minimum opérant sur les différences de répartition obtenues, caractérisé en ce que les moyens de recensement regroupent les fenêtres temporelles par classes en fonction de leur rang modulo p par rapport à une origine arbitraire et déterminent au cours de chaque fenêtre temporelle, la différence de répartition entre les transitions en avance et les transitions en retard par rapport aux fenêtres temporelles de même classe que la fenêtre temporelle en cours, et les moyens de détection de minimum délivrant un signal d'initialisation d'horloge au cours de fenêtres temporelles appartenant à la classe modulo p ayant la plus petite différence de répartition, le circuit comprenant en outre des moyens de levée de doute inhibant les moyens de détection de minimum lorsque la différence de répartition pour une classe de fenêtre temporelle ayant un rang modulo p au plus inférieur de −p/2 ou respectivement au plus supérieur de p/2 au rang de la classe de fenêtres pour laquelle un minimum de différence de répartition a été détecté n'est pas en faveur des transitions en retard ou respectivement en avance ainsi qu'une horloge locale à la fréquence d'horloge du message reçu synchronisée au départ d'une procédure d'acquisition par les moyens de détection de minimum.

L'estimation du rang modulo p de la classe de fenêtres temporelles avec laquelle coïncident les débuts des périodes de l'horloge du message reçu permet un calage initial de l'horloge locale avec un écart de phase au plus égal à 2 π/p, le nombre p est choisi de manière que cet écart soit suffisamment petit pour éliminer la possibilité de convergence d'un asservissement de phase vers la position de faux équilibre et même préférablement pour permettre, avec une bonne probabilité un traitement correct des données du message reçu.

Comme les moyens de comptabilisation ou de recensement opèrent sur une durée fixe, il est facile de remédier au délai introduit par l'estimation préalable de la phase d'horloge du message reçu en faisant transiter ce dernier dans une ligne à retard qui introduit un retard égal à cette durée fixée.

Les moyens de recensement se composent avantageusement des moyens de comptabilisation complétés par des moyens de calcul délivrant la différence de répartition relative aux fenêtres temporelles de même rang modulo p que la fenêtre temporelle en cours en opérant par récurrence à partir de la différence de répartition calculée au cours de la fenêtre temporelle précédente et des valeurs les plus récentes obtenues antérieurement pour les comptes relatifs à différentes classes de fenêtres temporelles.

D'autres caractéristiques et avantages de l'invention ressortiront des revendications jointes et de la description ci-après d'un mode de réalisition donné à titre d'exemple. Cette description sera faite en regard du dessin dans lequel:

la figure 1 représente un schéma général d'un circuit de récupération des phases d'horloge de messages binaires asynchrones codés en NRZ et cadencés par des horloges de même fréquence

et les figures 2 et 3 détaillent deux modes de réalisation du circuit d'acquisition d'horloge selon l'invention utilisé dans le circuit de la figure 1.

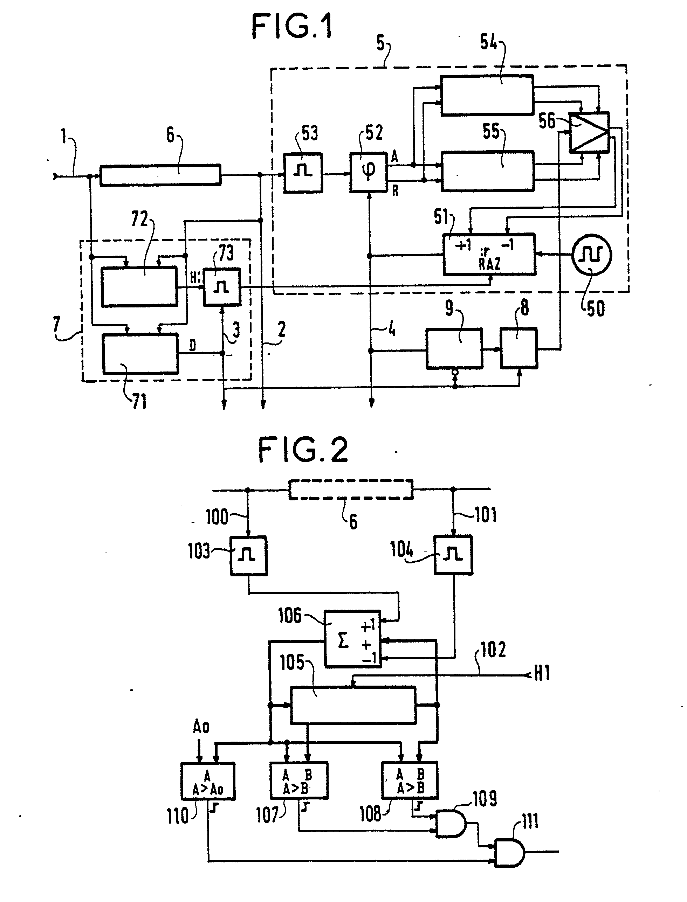

Le circuit représenté à la figure 1 a une entrée 1 sur laquelle sont appliqués les messages binaires asynchrones et plusieurs sorties 2, 3 et 4. On retrouve sur une sortie 2 les messages appliqués à l'entrée 1 après un délai constant comprenant le temps d'acquisition des phases de leurs horloges, sur une autre sortie 3 un signal binaire D de détection de modulation représentatif de la présence effective ou non d'un message binaire à la sortie 2 et sur une autre sortie 4 le signal d'horloge récupéré du message binaire disponible à la sortie 2. Il comporte essentiellement une horloge locale 5 à la fréquence F des horloges des messages reçus asservie en phase sur les transitions du message binaire disponible en sortie 2, une ligne à retard 6 intercalée entre l'entrée 1 et l'horloge locale 5 compensant le temps d'acquisition de phase, et un circuit d'acquisition rapide de phase 7 qui assure la détection d'une modulation, la synchronisation initiale de l'horloge locale 5 et, indirectement, le contrôle de son mode d'asservissement.

L'horloge locale 5 est munie d'une boucle d'asservissement de phase du premier ordre à deux filtres intégrateurs 54, 55 commutés par l'intermédiaire d'un sélecteur 56. L'un des filtres 54 a une constante de temps faible pour permettre le passage à l'écart de phase nul en une dizaine de bits d'un message mais suffisante pour assurer le stabilité de la convergence de l'asservissement de phase au delà des performances du circuit d'acquisition rapide de phase 7. L'autre filtre 55 a une constante de temps importante pour permettre le maintien de la phase acquise même en cas de perte ou d'étouffement momentané de la liaison mais compatible avec un glissement au moins égal au double de celui attendu entre oscillateurs d'émission et de réception. Le filtre à faible constante de temps 54 est en service en l'absence de détection de modulation et en présence de détection de modulation pendant les premier bits d'un message, le temps d'acquérir un écart de phase nul. Il est ensuite remplacé par l'autre filtre 55.

L'horloge locale 5 comporte, de manière classique, un oscillateur 50 à une fréquence F' égale à un multiple entier r de la fréquence F suivi d'un modulateur de phase réalisé avec un diviseur par r 51 muni d'une commande de remise à zéro et d'une commande permettant de modifier son rapport de division de ± 1. La commande de remise à zéro est utilisée par le circuit d'acquisition d'horloge 7 pour la synchronisation initiale de l'horloge locale. La commande permettant de modifier le rapport de division r de ± 1 est utilisée par la boucle à verrouillage de phase pour provoquer, selon le besoin, une avance ou un retard de phase de l'horloge locale 5.

La boucle d'asservissement de phase de l'horloge locale 5 comporte un détecteur de transition 53 qui reçoit en entrée les messages binaires issus de la ligne à retard 6 et délivre à sa sortie des impulsions de faible durée coïncidant avec les transitions de ces messages. Un comparateur de phase 54 à deux entrées, l'une connectée à la sortie du diviseur programmable 51, l'autre à celle du détecteur de transition 53, oriente ces impulsions vers l'une ou l'autre de ses sorties A, R selon qu'elles se trouvent en retard ou en avance de phase par rapport aux transitions d'un sens donné du signal d'horloge locale considérées comme débuts de période. Les filtres d'intégration 54, 55 connectés aux deux sorties du comparateur délivrent sur une sortie à deux bits un signal de maintien ou de correction en avance ou en retard de la phase du signal de l'horloge locale de manière à équilibrer le nombre des impulsions sur les deux sorties du comparateur de phase 52. Ils sont par exemple à récurrence stochastique du type "N before M" tel que décrit par J. R. CESSNA dans un article publié dans la revue IEEE Transactions on Communications VOL. COM. 20 N° 2, Avril 72, l'un avec des valeurs N et M petites lui donnant une faible inertie, l'autre avec des valeurs N et M grandes lui donnant une forte inertie. Le sélecteur 56 met en service l'un ou l'autre des filtres d'intégration 54, 55. Il peut être commandé, comme représenté par l'intermédiaire d'un bistable 8 et d'un compteur 9. En l'absence de message à la sortie 2 du circuit, le signal de détection de modulation D maintient le compteur 9 à zéro et le bistable dans une position dite de repos correspondant à la sélection du filtre d'intégration 54 ou 55 à faible constante de temps. En présence d'un message à la sortie 2 du circuit, le compteur 9 compte les bits de ce message et, arrivé à sa capacité maximale, envoie une impulsion de basculement au bistable 8 qui change d'état et sélectionne le filtre d'intégration à grande constante de temps.

Le circuit d'acquisition rapide de phase 7 comprend essentiellement deux parties, l'une 71 assurant la détection d'une modulation c'est-à-dire la présence d'un message en transit dans la ligne à retard 6 émettant un signal de détection de modulation D et l'autre 72 assurant l'acquisition d'horloge c'est-à-dire une estimation de la phase initiale du message en transit dans la ligne à retard 6.

Le circuit de détection de modulation 71 peut comporter un auto-corrélateur à deux entrées connectées aux extrémités de la ligne à retard 6 qui calcule la valeur d'autocorrélation entre deux versions du signal reçu en transit dans la ligne à retard 6 retardées l'une par rapport à l'autre d'une demi-période d'horloge et un comparateur à double seuil engendrant un signal binaire D passant à un état correspondant à une détection de modulation lorsque la valeur d'autocorrélation délivrée par l'autocorrélateur est supérieure à un seuil inférieur en dessous duquel on considère que le signal reçu est du bruit et inférieure à un seuil supérieur au dessus duquel on considère qu'il y a absence de signal reçu.

Le circuit d'acquisition d'horloge 72 dont deux versions vont être décrites engendre à partir des signaux aux extrémités de la ligne à retard 6, un signal binaire d'initialisation d'horloge $H_i$ dont les transitions de 0 à 1 approchent les débuts des périodes d'horloge d'un message en transit dans la ligne à retard 6 lorsqu'un tel message existe effectivement. Ce signal $H_i$ est appliqué à un monostable 73 qui émet des impulsions de remise à zéro du diviseur programmable 51 de l'horloge locale 5 lorsqu'il n'est pas bloqué par le signal D du circuit de détection de modulation c'est-à-dire uniquement au début de chaque détection de modulation et pour un seul déclenchement.

L'estimation initiale de la phase d'horloge du message reçu se fait en partageant la durée d'une période d'horloge en p fenêtres temporelles successives de même durée, en regroupant ces fenêtres par classes en fonction de leur rang modulo p par rapport à une origine arbitraire choisie localement et en déterminant la classes de fenêtres coïncidant le plus souvent avec les transitions du message reçues et mémorisées dans la ligne à retard 6. Cette détermination peut se faire simplement en comptabilisant, au cours de chaque fenêtre temporelle, le nombre de transitions du message mémorisé dans la ligne à retard 6 ayant coïncidé avec des fenêtres temporelles antérieures de même classe modulo p et en détectant si ce nombre est maximum.

La figure 2 illustre le schéma d'un circuit d'acquisition d'horloge fonctionnant de cette manière. Il présente, outre ses entrées 100, 101 par lesquelles il reçoit les signaux présents aux extrémités de la ligne à retard 6, une entrée de cadencement 102 sur laquelle il reçoit un signal de cadencement $H_1$ définissant la largeur des fenêtres temporelles, ayant p fois la fréquence F et pouvant être obtenu à partir de l'oscillateur 50 de l'horloge locale par une division de rapport adéquat.

Deux détecteurs de transitions 103, 104 sont connectés aux extrémités de la ligne à retard 6 et délivrent en sortie des impulsions de même largeur qu'une fenêtre temporelle, synchrones des transitions.

Un registre à décalage à p étages 105 rythmé par le signal de cadencement $H_1$ joue le rôle d'une mémoire circulante qui mémorise les comptes des transitions du signal contenu dans la ligne à retard 6 s'étant produites dans les p classes de fenêtres temporelles.

Un additionneur 106 bouclé sur lui même par l'intermédiaire du registre à décalage 105 assure la mise à jour des différents comptes. Outre son entrée additive de bouclage il a une entrée d'incrémentation d'une unité qui est connectée à la sortie du détecteur de transitions 103 relié à l'entrée de la ligne à retard 6 et qui permet la prise en compte de chaque transition nouvellement reçue, et une entrée de décrémentation d'une unité qui est connectée à la sortie du détecteur de transitions 104 relié à la sortie de la ligne à retard 6 et qui permet le décompte de chaque transition du signal sortant de la ligne à retard 6.

Un détecteur de maximum relatif délivre en sortie un signal binaire au niveau logique 1 si le compte de la classe modulo p à laquelle appartient la fenêtre temporelle en cours est supérieur aux comptes des classes modulo p des fenêtres temporelles précédant et suivant immédiatement la fenêtre temporelle en cours. Il est formé de deux comparateurs 107, 108 à deux entrées connectés l'un à l'entrée et à la sortie du premier étage du registre à décalage 105 et l'autre à l'entrée du registre à décalage 105 et à la sortie de son dernier étage, et d'une porte logique de type "et" 109.

Un comparateur à seuil 110 connecté à la sortie de l'additionneur 106 bloque la sortie du détecteur de maximum relatif par l'intermédiaire d'une porte logique de type "et" 111 dans le cas où le maximum détecté ne dépasse pas un certain seuil choisi en fonction du bruit pouvant affecter le message reçu.

La détection de la class modulo p de fenêtres temporelles coïncidant avec la majorité des transitions du message mémorisé dans la ligne à retard 6 peut également se faire à partir de la détermination parmi les classes modulo p de fenêtres temporelles, de celle par rapport aux fenêtres de laquelle les transitions du message se répartissent le plus équitablement de part et d'autre. Cette détermination est moins sensible aux bruits car elle permet de mettre en oeuvre pour chaque classe la plupart des transitions du message mémorisé dans la ligne à retard 6 et non uniquement celles coïncidant avec les fenêtres temporelles de la classe considérée. Elle a par contre l'inconvénient de mener à une incertitude, les transitions se répartissant de manière équilibrée aussi bien de part et d'autre de la classe des fenêtres avec lesquelles elles coïncident en majorité que de part et d'autre de la classe des fenêtres temporelles avec lesquelles elles sont déphasées en majorité d'une demi-période d'horloge. Elle doit être complétée par une levée de doute simultanée consistant à vérifier que les fenêtres temporelles d'une classe ayant un rang modulo p au plus inférieur de $-p/2$ ou respectivement au plus supérieur de $p/2$ au rang de la classe de fenêtres pour laquelle un minimum de différence de répartition a été détecté sont effectivement en avance ou respectivement en retard par rapport à la majorité des transitions de message.

Comme on l'a vu précédemment, on peut obtenir, au cours de chaque fenêtre temporelle, le compte des transitions du message mémorisé dans la ligne à retard 6 coïncidant avec des fenêtres temporelles antérieures du mêmes rang modulo p. Cela est également le cas de la répartition des transitions relativement aux fenêtres temporelles de même rang modulo p que la fenêtre en cours qui peut s'obtenir à l'aide d'une formule de récurrence mettant en oeuvre la répartition calculée lors de la fenêtre temporelle précédant celle en cours et les comptes des transitions ayant coïncidé avec certaines classes modulo p de fenêtres temporelles.

Pour apprécier la répartition des transitions de part et d'autre d'une classe de fenêtres temporelles de rang i, il faut partager les intervalles de temps séparant les fenêtres de cette classe de rang i en deux parties égales, les unes précédant chaque fenêtre et constituant le domaine où les transitions sont considérées comme en avance, et les autres suivant chaque fenêtre et constituant le domaine où les transitions sont considérées comme en retard, et calculer la différence de répartition entre les transitions en avance et les transitions en retard.

Le domaine d'avance coïncide avec les fenêtres temporelles dont les classes ont un rang modulo p inférieur au ième d'au plus p/2 tandis que le domaine de retard coïncide avec les fenêtres temporelles dont les classes ont un rang modulo p supérieur au ième d'au plus p/2. Pour que ces deux domaines soient de même durée la classe de fenêtres de rang i doit en être exclue ou y être inclue selon que le nombre p de fenêtres temporelles par période d'horloge est impair ou pair.

En supposant que ce nombre p soit impair les transitions du message en transit dans la ligne à retard 6 en avance par rapport aux fenêtres temporelles de la classe de rang i sont celles qui ont coïncidé avec des fenêtres temporelles appartenant à des classes de rang j vérifiant les conditions:

$$i - k \leqslant j < i \text{ avec } k = \tfrac{1}{2}(p - 1)$$

tandis que les transitions en retard par rapport aux fenêtres temporelles de la classe de rang i sont celles qui ont coïncidé avec des fenêtres temporelles appartenant à des classes de rang j vérifiant les conditions:

$$i < j \leqslant i + k$$

La différence de répartition $y_i$ entre les transitions en avance et en retard de phase par rapport aux fenêtres temporelles de la ième classe s'exprime en fonction des nombres $x_j$ de transitions coïncidant avec les fenêtres temporelles d'un rang j par l'expression:

$$y_i = \sum_{j = i - k}^{i - 1} x_j - \sum_{j = i + 1}^{i + k} x_j$$

et peut se mettre sous la forme:

$$y_i = \sum_{j = i - k - 1}^{i - 2}$$

$$x_j = \sum_{j = i}^{i + k - 1} x_j + x_{i-1} - x_{i-1k} + x_i - x_{i+k}$$

qui fait apparaitre l'expression de la différence de répartition $y_{i-1}$. En remarquant que les indices sont à considérer modulo p:

$$i - 1 - k = i + k$$

on obtient la formule de récurrence:

$$y_i = y_{i-1} + x_i + x_{i-1} - 2 x_{i+k} \qquad (1)$$

Si le nombre p de fenêtres temporelles par période d'horloge est un entier pair, il faut inclure les fenêtres de la classe de rang i considérée dans l'un des domaines d'avance ou de retard ce qui revient à prendre comme repères d'avance ou de retard pour les transitions du message les débuts ou les fins des fenêtres de la classe de rang i. Si les fenêtres de cette dernière classe sont mises dans le domaine de retard la formule de récurrence devient:

$$y_i = y_{i-1} + 2 x_{i-1} - 2 x_{i+k'} \text{ avec } k' = \tfrac{1}{2} p \quad (2)$$

alors que dans le cas contraire elle devient:

$$y_i = y_{i-1} + 2 x_i - 2 x_{i+k'} \quad (3)$$

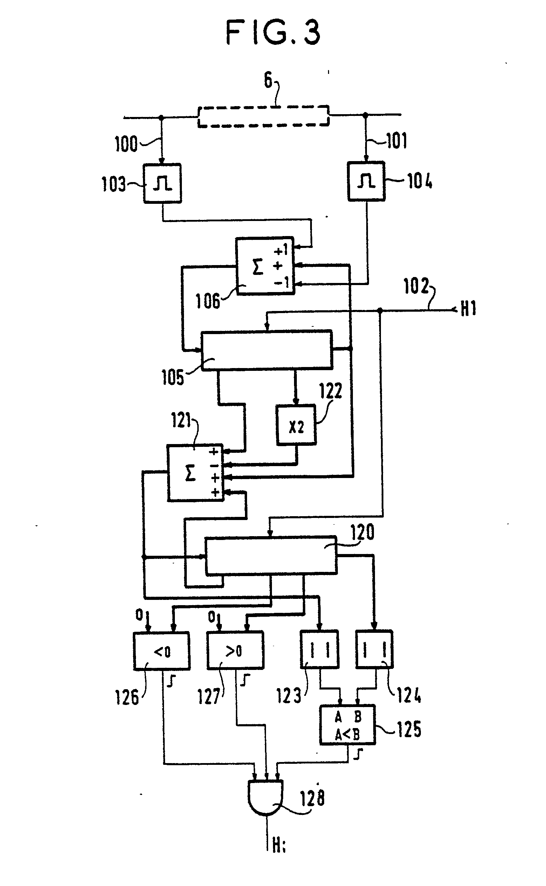

La figure 3 illustre le schéma d'un circuit d'acquisition d'horloge que est adapté au cas d'un nombre p impair de fenêtres temporelles par période d'horloge et qui met en oeuvre la relation de récurrence (1).

Ce circuit comporte, comme celui de la figure 2, deux entrées 100, 101 connectées aux extrémités de la ligne à retard 6 et une entrée 102 recevant un signal de cadencement $H_1$ qui définit la largeur des fenêtres temporelles et dont la fréquence est un multiple impair p de la fréquence F obtenu à partir de l'oscillateur 50 par une division de rapport adéquat, un registre à décalage à p étages 105 rythmé par le signal de cadencement $H_1$ jouant le rôle d'une mémoire circulante mémorisant les comptes $x_i$ des transitions du message contenu dans la ligne à retard 6 s'étant produites dans les différentes classes modulo p de fenêtres temporelles, un additionneur 106 bouclé sur lui-même par l'intemédiaire du registre à décalage à p étages 105 assurant la mise à jour des comptes grâce à une entrée d'incrémentation d'une unité connectée par l'intermédiaire d'un détecteur de transitions 103 à l'entrée de la ligne à retard 6 et à une entrée de décrémentation d'une unité connectée par l'intermédiaire d'un détecteur de transitions 104 à la sortie de la ligne à retard 6.

Un deuxième registre à décalage 102 à p étages rythmé par le signal de cadencement $H_1$ joue le rôle d'une mémoire circulante conservant sur une durée d'une période d'horloge les différences de répartition y calculées au cours de p fenêtres temporelles précédemment écoulées.

Un additionneur 121 bouclé sur lui même par l'intermédiaire du premier étage du registre à décalage 120 effectue le calcul de la différence de répartition $y_i$ entre les transitions du message en transit dans la ligne à retard 6 en avance et respectivement en retard par rapport à la classe de fenêtres temporelles à laquelle appartient la fenêtre temporelle en cours. Il met en oeuvre pour cela la relation de récurrence (1) et comporte à cet effet, outre son entrée additive de bouclage sur laquelle il reçoit la différence de répartition $y_{i-1}$ calculée lors de la fenêtre temporelle précédente, deux autres entrées additives connectée l'une à la sortie du dernier étage du registre à décalage 105 sur laquelle est disponible le compte $x_i$ des transitions coïncidant avec la classe de fenêtres de rang i modulo p à laquelle appartient la fenêtre temporelle en cours et l'autre à la sortie du premier étage du registre à décalage 105 sur laquelle est disponible le compte $x_{i-1}$ des transitions coïncidant avec la classe de fenêtres de rang i−1 modulo p, et une entrée soustractive connectée par l'intermédiaire d'un multiplieur par deux 122 à la sortie du $i + \tfrac{1}{2}(p+1)$ ième étage du registre à décalage 105 sur laquelle est disponible le compte $x_{i+\tfrac{1}{2}}(p+1)$.

La classe modulo p des fenêtres temporelles par rapport à laquelle les transitions du message contenu dans la ligne à retard 6 se répartissent de part et d'autre de la façon la plus équitable est celle pour laquelle la différence de répartition y est minimum en valeur absolue. La recherche de ce minimum se fait par l'intermédiaire de deux circuits extracteurs de valeur absolue 123, 124 et d'un comparateur 125 à deux entrées connectées à leur suite. Le circuit extracteur de valeur absolue 123 est connecté en entrée à la sortie l'additionneur 121 où se trouve disponible la différence de répartition $y_i$ relative à la classe en modulo y de la fenêtre en cours tandis que le circuit extracteur de valeur absolue 124 est connecté en entrée à la sortie du dernier étage du registre à décalage 120 où se trouve disponible la différence de répartition $y_{i+1}$ relative à la classe modulo p de la fenêtre temporelle qui va suivre celle en cours. Le comparateur 125 délivre en sortie un signal binaire à l'état logique 1 tant que la différence de répartition $y_i$ relative à la classe modulo p de la fenêtre en cours est inférieure en valeur absolue à celle $y_{i+1}$ de la classe modulo p de la fenêtre temporelle qui va suivre.

Deux comparateurs à seuils 126, 127 contrôlent la sortie du comparateur 125 par l'intermédiaire d'une porte logique de type "et" 128 délivrant un signal d'initialisation d'horloge $H_i$. Ils ont pour fonction d'effectuer la levée de doute mentionnée précédemment. L'un 126 des comparateurs à seuil est connecté en entrée à la sortie d'un étage du registre à décalage 120 dont le rang est proche de $\tfrac{1}{4}(p-1)$ et délivre en sortie un signal binaire à l'état logique 1 si la différence de répartition y qu'il reçoit du registre à décalage 120 est négative. L'autre comparateur à seuil 127 est connecté à la sortie d'un étage du registre à décalage 120 dont le rang est proche de $\tfrac{1}{4}(3 p-1)$ et délivre en sortie un signal binaire à l'état logique 1 si la différence de répartition y qu'il reçoit du registre à décalage 120 est positive.

La différence y présente à la sortie du registre à décalage 120 de rang proche de $\tfrac{1}{4}(p-1)$ est relative à une classe de fenêtres temporelles ayant un rang inférieur au rang i de la fenêtre temporelle en cours d'environ $\tfrac{1}{4}(p-1)$ et précédant par conséquent les fenêtres temporelles de rang i d'environ un quart de période d'horloge. Lorsque la différence de répartition $y_i$ passe par un minimum en valeur absolue pour les fenêtres temporelles de rang i, elle est nécessairement négative si ces fenêtres coïncident avec la majorité des transitions du message, et nécessairement positive si ces fenêtres sont déphasées d'une demi-période d'horloge par rapport à la majorité des transitions du message. Cet état de fait est utilisé par le comparateur à seuil 126 pour éliminer la détection du minimum absolu correspondant au faux équilibre.

La différence de répartion y présente à la sortie du registre à décalage 120 de rang proche de $\tfrac{1}{4}$

(3p−1) est relative à une classe de fenêtres temporelles ayant un rang inférieur au rang i de la fenêtre temporelle en cours d'environ $\frac{1}{4}$ (3p−1) ou, compte-tenu de la définition des rangs modulo p, ayant un rang supérieur au rang i de la fenêtre temporelle en cours d'environ $\frac{1}{4}$ (p−1) et suivant par conséquent les fenêtres temporelles de rang i d'environ un quart de période d'horloge. Lorsque la différence de répartition $y_i$ passe par un minimum en valeur absolue pour les fenêtres temporelles de rang i, elle est nécessairement positive si ces fenêtres sont déphasées d'une demi-période d'horloge par rapport à la majorité des transitions du message. Cet état de fait est utilisé par le comparateur à seuil 127 pour éliminer la détection du minimum absolu correspondant au faux équilibre. Ainsi grâce aux comparateurs à seuils 126, 127 le signal d'initialisation d'horloge $H_i$ présente des transitions de 0 à 1 qui n'apparaissent qu'au cours de fenêtres temporelles coïncidant les débuts des périodes d'horloge des message et qui sont utilisées pour la synchronisation initiale de l'horloge locale 5.

L'additionneur 121 est avantageusement un circuit numérique calculant en binaire complément à deux ce qui donne une structure d'une grande simplicité aux comparateurs à seuils 126, 127 qui n'ont plus qu'à transmettre ou inverser le bit de signe et aux circuits extracteurs de valeur absolue 123, 124 qui n'ont plus qu'à éliminer le bit de signe.

**Revendications**

1. Circuit d'acquisition de l'horloge d'un message binaire codé en NRZ comprenant des moyens de cadencement engendrant un signal de cadencement ($H_1$) ayant une fréquence égale à un multiple p de celle (F) de l'horloge du message binaire et définissant des fenêtres temporelles successives de même durée, des moyens de comptabilisation (105, 106) opérant sur les transitions du signal reçu depuis plusieurs périodes d'horloge, des moyens de détection de maximum (107, 108) opérant sur les comptes obtenus, caractérisé en ce que les moyens de comptabilisation (105, 106) regroupent les fenêtres temporelles par classes en fonction de leur rang modulo p par rapport à une origine arbitraire et déterminent au cours de chaque fenêtre temporelle le compte ($X_i$) des transitions ayant coïncidé avec des fenêtres antérieures de même classe (i) modulo p que la fenêtre temporelle en cours, et les moyens de détection de maximum délivrent un signal d'initialisation ($H_i$) au cours des fenêtres temporelles appartenant à la classe modulo p ayant le compte maximum, le circuit comprenant en outre une horloge locale (5) à la fréquence d'horloge du message reçu, synchronisée au départ d'une procédure d'acquisition par les moyens de détection de maximum.

2. Circuit d'acquisition de l'horloge d'un message codé NRZ comprenant des moyens de cadencement ($H_1$) ayant une fréquence égale à un multiple p de celle (F) de l'horloge du message binaire et définissant des fenêtres temporelles successives de même durée, des moyens de recensement (105, 106, 120, 121, 122) opérant sur les transitions du message reçu depuis plusieurs périodes d'horloge, des moyens de détection de minimum (123, 124, 125) opérant sur les différences de répartition obtenues, caractérisé en ce que les moyens de recensement (105, 106, 120, 121, 122) regroupent les fenêtres temporelles par classes en fonction de leur rang modulo p par rapport à une origine arbitraire et déterminent au cours de chaque fenêtre temporelle, la différence ($Y_i$) de répartition entre les transitions en avance et les transitions en retard par rapport aux fenêtres temporelles de même classe (i) que la fenêtre temporelle en cours, et les moyens de détection de minimum (123, 124, 125) délivrant un signal d'initialisation d'horloge au cours de fenêtres temporelles appartenant à la classe modulo p ayant la plus petite différence de répartition, le circuit comprenant en outre des moyens de levée de doute (126, 127) inhibant les moyens de détection de minimum lorsque la différence de répartition pour une classe de fenêtre temporelle ayant un rang modulo p au plus inférieur de −p/2 ou respectivement au plus supérieur de p/2 au rang de la classe de fenêtres pour laquelle un minimum de différence de répartition a été détecté n'est pas en faveur des transitions en retard ou respectivement en avance ainsi qu'une horloge locale (5) à la fréquence d'horloge du message reçu synchronisée au départ d'une procédure d'acquisition par les moyens de détection de minimum (123, 124, 125).

3. Circuit selon la revendication 2, caractérisé en ce que lesdits moyens de recensement comportent:

des moyens de comptabilisation (105, 106) opérant sur les transitions du signal reçu depuis plusieurs périodes d'horloge, regroupant les fenêtres temporelles par classe en fonction de leur rang modulo p par rapport à une origine arbitraire et déterminant au cours de chaque fenêtre temporelle le compte ($x_i$) des transitions ayant coïcidé avec des fenêtres temporelles antérieures de la même classe (i) que la fenêtre temporelle en cours

et des moyens de calcul (120, 121, 122) délivrant au cours de chaque fenêtre temporelle la valeur de la différence de répartition ($y_i$) relative à la classe (i) de la fenêtre temporelle en cours en opérant par récurrence à partir de la différence de répartition ($y_{i-1}$) calculée au cours de la fenêtre temporelle précédente et des valeurs les plus récentes délivrées antérieurement par les moyens de comptabilisation (105, 106) pour des comptes de différentes classes de fenêtres temporelles.

4. Circuit selon la revendication 3 adapté à un nombre p impair caractérisé en ce que les moyens de calcul (120, 121, 122) délivrent au cours de chaque fenêtre temporelle la valeur de la différence $y_i$ de répartition à partir de la loi de récurrence:

$$y_i = y_{i-1} + x_i + x_{i-1} - 2\, x_{i+k} \text{ avec } k = \tfrac{1}{2}\,(p-1)$$

5. Circuit selon la revendication 1, caractérisé en ce que les moyens de comptabilisation comportent:

un registre à décalage à p étage (105) rythmé par le signal de cadencement ($H_1$)

et un additionneur (106) présentant une entrée additive bouclée à sa sortie par l'intermédiaire du registre à décalage (105), une entrée d'incrémentation d'une unité connectée à la sortie d'un premier détecteur de transitions (103) auquel le message est appliqué sans délai et une entrée de décrémentation d'une unité connectée à la sortie d'un deuxième détecteur de transitions (104) auquel le message est appliqué avec un certain retard.

6. Circuit selon la revendication 3 adapté à un nombre p impair caractérisé en ce que le circuit de recensement comporte:

des moyens de comptabilisation ayant

un registre à décalage à p étages (105) rythmé par le signal de cadencement (H),

et un additionneur (106) présentant une entrée additive bouclée à sa sortie par l'intermédiaire du registre à décalage (105), une entrée d'incrémentation d'une unité connectée à la sortie d'un premier détecteur de transitions (103) auquel le message est appliqué sans délai et une entrée de décrémentation d'une unité connectée à la sortie d'un deuxième détecteur de transitions (104) auquel le message est appliqué avec un certain retard

et des moyens de calcul ayant

un circuit doubleur (122) connecté à la sortie de l'étage de rang $\frac{1}{2}$ (p+1) du registre à décalage (105) des moyens de comptabilisation,

un registre à décalage (120) rythmé par le signal de cadencement ($H_1$)

et un additionneur (121) ayant une première entrée additive bouclée à sa sortie par l'intermédiaire du premier étage du registre à décalage (120) des moyens de calcul, une deuxième et une troisième entrée additive connectées aux sorties des premier et dernier étages du registre à décalage (105) des moyens de comptabilisation, et une entrée soustractive connectée en sortie du circuit doubleur (122).

7. Circuit selon la revendication 6 caractérisé en ce que les moyens de détection de minimum comporte:

deux circuits extracteurs de valeur absolue (123, 124) connecté entre l'entrée du registre à décalage (120) des moyens de calcul et la sortie du p ième étage de ce dernier

et un comparateur à deux entrées (125) connectées aux circuits extracteurs de valeur absolue engendrant un signal d'initialisation d'horloge chaque fois que la valeur entrée du registre à décalage (120) devient inférieure en valeur absolue à celle en sortie du p ième étage de ce même registre.

8. Circuit selon la revendication 6 adapté à un nombre p impair immédiatement supérieur à un nombre divisible par quatre, caractérisé en ce que les moyens de levée de doute comportent:

un comparateur à seuil nul (126) connecté à la sortie de l'étage de rang $\frac{1}{4}$ (p−1) du registre à décalage (120) des moyens de calcul inhibant les moyens de détection de minimum tant que le signal qui lui est appliqué est positif

et un comparateur à seuil nul (127) connecté à la sortie de l'étage de rang $\frac{1}{4}$ (3p−1) du registre à décalage (120) des moyens de calcul inhibant les moyens de détection de minimum tant que le signal qui lui est appliqué est négatif.

**Patentansprüche**

1. Schaltungsanordnung zur Gewinnung des Taktes einer NRZ-kodierten Binärnachricht, mit Kadenziermitteln, die ein aufeinanderfolgende Zeitfenster gleicher Dauer definierendes Kadenzsignal ($H_1$) mit einer Frequenz gleich einem Vielfachen p der Taktfrequenz (F) der Binärnachricht erzeugt, mit Akkumuliermitteln (105, 106), die die Übergänge des empfangenen Signals über mehrere Taktperioden verarbeiten, und mit Mitteln (107, 108) zur Erkennung eines Höchstwerts, denen die akkumulierten Werte zugeführt werden, dadurch gekennzeichnet, daß die Akkumuliermittel (105, 106) die Zeitfenster nach Klassen abhängig von ihrem Rang modulo p bezüglich eines beliebigen Anfangs in Gruppen einteilen und während jedes Zeitfensters den akkumulierten Wert ($X_i$) der Übergänge bestimmen, der mit vorausgegangenen Zeitfenstern derselben Klasse (i) modulo p wie das augenblickliche Zeitfenster zusammengefallen ist, und daß die Mittel zur Erkennung eines Höchstwerts ein Startsignal ($H_i$) während der der Klasse modulo p angehörenden Zeitfenster mit dem höchsten akkumulierten Wert liefern, wobei die Schaltungsanordnung außerdem einen örtlichen Taktgeber (5) mit der Taktfrequenz der empfangenen Nachricht aufweist, der zum Beginn einer Gewinnungsprozedur durch die Mittel zur Erkennung eines Höchstwerts synchronisiert wird.

2. Schaltungsanordnung zur Gewinnung des Taktes einer NRZ-kodierten Nachricht mit Kadenziermitteln ($H_1$), die eine Frequenz gleich einem Vielfachen p der Taktfrequenz (F) der Binärnachricht erzeugen und aufeinanderfolgende Zeitfenster gleicher Dauer definieren, mit Zählmitteln (105, 106, 120, 121, 122), die die Übergänge der empfangenen Nachricht über mehrere Taktperioden verarbeiten, mit Mitteln zur Erkennung eines Mindestwerts (123, 124, 125), die die erhaltenen Verteilungsdifferenzen verarbeiten, dadurch gekennzeichnet, daß die Zählmittel (105, 106, 120, 121, 122) die Zeitfenster nach Klassen in Abhängigkeit von ihrem Rang modulo p bezüglich eines beliebigen Anfangs in Gruppen einteilen und während jedes Zeitfensters die Verteilungsdifferenz ($Y_i$) zwischen den bezüglich den Zeitfenstern gleicher Klasse (i) wie das augenblickliche Zeitfenster voreilenden und nacheilenden Übergängen bestimmen, daß die Mittel zur Erkennung des Mindestwerts (123, 124, 125) ein Takt-Startsignal während Zeitfenstern liefern, die der Klasse modulo p mit der geringsten Verteilungsdifferenz angehören, und daß die Schaltungsanordnung außerdem Mittel zur Behebung eines Zweifels (126, 127) aufweist, die die Mittel zur Erkennung des Mindestwerts blockieren, wenn die Verteilungsdifferenz für eine Zeitfensterklasse mit einem Rang modulo p, der höchstens um −p/2 kleiner bzw. höchstens um p/2 größer als der Rang der Klasse von Fenstern ist, für die ein Mindestwert der Verteilungsdifferenz festgestellt wurde, nicht für einen nacheilenden bzw. voreilenden Übergang spricht, wobei ein örtlicher Taktgeber (5) mit der Taktfrequenz der empfangenen Nachricht vorgesehen ist und zu Beginn einer Taktgewinnungsprozedur durch die Mittel zur Erkennung eines Mindestwerts (123, 124, 125) synchronisiert wird.

3. Schaltungsanordnung nach Anspruch 2, dadurch gekennzeichnet, daß die Zählmittel aufweisen:

Akkumuliermittel (105, 106), die die Übergänge des über mehrere Taktperioden empfangenen Signals verarbeiten und die Zeitfenster abhängig von ihrem Rang modulo p bezüglich eines beliebigen Anfangs in Klassen einteilen und während jedes Zeitfensters den akkumulierten Wert ($x_i$) der Übergänge bestimmen, der mit vorhergehenden Zeitfenstern derselben Klasse (i) wie das augenblickliche Zeitfenster zusammengefallen ist,

und Rechenmittel (120, 121, 122), die während jedes Zeitfensters den Wert der Verteilungsdifferenz ($y_i$) bezüglich der Klasse (i) des augenblicklichen Zeitfensters ausgeben und ausgehend von der Verteilungsdifferenz ($y_{i-1}$), die während des vorhergehenden Zeitfensters berechnet wurde, und von den aktuellsten von den Akkumuliermitteln (105, 106) für akkumulierte Werte verschiedener Klassen von Zeitfenstern früher gelieferten Werten rekurrent verarbeiten.

4. Schaltungsanordnung nach Anspruch 3, die an eine ungerade Zahl p angepaßt ist, dadurch gekennzeichnet, daß die Rechenmittel (120, 121, 122) während jedes Zeitfensters den Wert der Verteilungsdifferenz $y_i$ auf der Basis der Rekurrenzregel ausgeben:

$$y_i = y_{i-1} + x_i + x_{i-1} - 2x_{i+k} \text{ mit } k = (p-1)/2.$$

5. Schaltungsanordnung nach Anspruch 1, dadurch gekennzeichnet, daß die Akkumuliermittel aufweisen:

ein Schieberegister mit p Stufen (105), das mit dem Kadenzsignal ($H_1$) weitergeschaltet wird,

und einen Addierer (106) mit einem Addiereingang, der an den Ausgang über das Schieberegister (105) rückgekoppelt ist, mit einem Inkrementiereingang um eine Einheit, der an den Ausgang eines ersten Übergangsdetektors (103) angeschlossen ist, dem die Nachricht ohne Verzögerung zugeführt wird, und mit einem Dekrementiereingang um eine Einheit, der an den Ausgang eines zweiten Übergangsdetektors (104) angeschlossen ist, dem die Nachricht mit einer gewissen Verzögerung zugeführt wird.

6. Schaltungsanordnung nach Anspruch 3 in Anpassung an einen ungeraden Wert p, dadurch gekennzeichnet, daß der Zählkreis aufweist:

Akkumuliermittel mit

einem p-stufigen Schieberegister (105), das vom Kadenzsignal (H) weitergeschaltet wird,

und einem Addierer (106) mit einem Addiereingang, der mit seinem Ausgang über das Schieberegister (105) rückgekoppelt ist, mit einem Inkrementiereingang um eine Einheit, der an den Ausgang eines ersten Übergangsdetektors (103) angeschlossen ist, welchem die Nachricht ohne Verzögerung zugeführt wird, und mit einem Dekrementiereingang um eine Einheit, der an den Ausgang eines zweiten Übergangsdetektors (104) angeschlossen ist, welchem die Nachricht mit einer gewissen Verzögerung zugeführt wird,

und Rechenmittel mit

einem Verdoppelungskreis (122), der an den Ausgang der Stufe des Schieberegisters (105) mit dem Rang (p+1)/2 der Akkumuliermittel angeschlossen ist,

einem Schieberegister (120), das vom Kadenzsignal ($H_1$) weitergeschaltet wird,

und mit einem Addierer (121) mit einem ersten additiven Eingang, der an seinen Ausgang über die erste Stufe des Schieberegisters (120) der Rechenmittel rückgekoppelt ist, einem zweiten und einem dritten additiven Eingang, die an die Ausgänge der ersten bzw. letzten Stufe des Schieberegisters (105) der Akkumuliermittel angeschlossen sind, und mit einem Subtraktionseingang, der an den Ausgang des Verdopplungskreises (122) angeschlossen ist.

7. Schaltungsanordnung nach Anspruch 6, dadurch gekennzeichnet, daß die Mittel zur Erkennung eines Mindestwerts aufweisen:

zwei Schaltkreise zur Absolutwertberechnung (123, 124), die an den Eingang des Schieberegisters (120) der Rechenmittel bzw. den Ausgang der p-ten Stufe dieses Registers angeschlossen sind,

und einen Komparator mit zwei Eingängen (125), die an die Schaltkreise zur Absolutwertberechnung angeschlossen sind und ein Takt-Startsignal immer dann liefern, wenn der Wert am Eingang des Schieberegisters (120) in Absolutbeträgen kleiner als der am Ausgang der p-ten Stufe dieses Registers wird.

8. Schaltungsanordnung nach Anspruch 6 in Anpassung an einen ungeradzahligen Wert p, der unmittelbar auf eine durch 4 teilbare Zahl folgt, dadurch gekennzeichnet, daß die Mittel zur Behebung des Zweifels aufweisen:

einen Komparator mit einem Schwellwert Null (126), der an den Ausgang der Stufe mit dem Rang (p−1)/4 des Schieberegisters (120) der Rechenmittel angeschlossen ist und die Mittel zur Erkennung eines Mindestwerts blockiert, solange das ihm zugeführte Signal positiv ist,

und einen Komparator mit einem Schwellwert Null (127), der an den Ausgang der Stufe des Rangs (3p−1)/4 des Schieberegisters (120) der Rechenmittel angeschlossen ist und die Mittel zur Erkennung eines Mindestwerts blockiert, solange das an ihn angelegte Signal negativ ist.

## Claims

1. A circuit for acquiring the clock of a binary NRZ-coded message, comprising timing means generating a timing signal ($H_1$) at a frequency equal to p times the binary message clock frequency (F), and defining successive time windows of equal duration, totalizing means (105, 106) operating on the transitions of the signal received since several clock periods, maximum detection means (107, 108) operating on the totals obtained, characterized in that the totalizing means (105, 106) group the time windows into classes in accordance with their rank modulo p relative to an arbitrary origin, and determine during each time window the total ($X_i$) of the transitions which has coincided with earlier time windows of the same class (i) modulo p as the current time window, and that the maximum detection means supply an initialisation signal ($H_i$) during the time windows belonging to the class modulo p with the highest total, the circuit further comprising a local clock (5) at the clock frequency of the received message, this clock being synchronized at the beginning of an acquisition procedure by the maximum detection means.

2. A circuit for acquiring the clock of a NRZ-coded message comprising timing means ($H_1$) having a frequency equal to p times the binary message clock frequency (F), and defining successive time windows of equal duration, count means (105, 106, 120, 121, 122) operating on the transitions of the message received since several clock periods, minimum detection means (123, 124, 125) operating on the obtained distribution differences, characterized in that the count means (105, 106, 120, 121, 122) group the time windows into classes in accordance with their rank modulo p relative to an arbitrary origin and determine during each time window the distribution difference ($Y_i$) between the advance transitions and the delayed transitions with respect to the time windows of the same class (i) as the current time window, and the minimum detection means (123, 124, 125) supplying a clock initialisation signal during time windows belonging to the class modulo p having the smallest distribution difference, the circuit further comprising doubt removing means (126, 127) inhibiting the minimum detection means whenever the distribution difference for a time window class, whose rank p is at most −p/2 lower than or at most +p/2 greater than the rank of the class of windows for which a distribution difference minimum has been detected, does not favour delay transitions or advance transitions respectively, as well as a local clock (5) at the clock frequency of the received message and synchronized at the beginning of an acquisition procedure by the minimum detection means (123, 124, 125).

3. A circuit according to claim 2, characterized in that said counting means comprise:
    totalizing means (105, 106) operating on the transitions of the received signal over a plurality of clock periods, and grouping the time windows into classes in accordance with their rank modulo p relative to an arbitrary origin, and determining during each time window the total ($x_i$) of the transitions which has coincided with earlier time windows of the same class (i) as the current time window,
    and computing means (120, 121, 122) supplying during each time window the value of the distribution difference ($y_i$) relative to the class (i) of the current time window, and employing a recurrence operation on the basis of the distribution difference ($y_{i-1}$) computed during the preceding time window and on the most recent values previously supplied by the totalizing means (105, 106) for the totals of different classes of time windows.

4. A circuit according to claim 3, adapted to an odd number p, characterized in that during each time window, the computing means (120, 121, 122) supply the value of the distribution difference $y_i$ on the basis of the recurrence law:

$$y_i = y_{i-1} + x_i + x_{i-1} - 2x_{i+k} \text{ with } k = (p-1)/2$$

5. A circuit according to claim 1, characterized in that the totalizing means comprise:
    a shift register having p stages (105) and clocked by the timing signal ($H_1$)
    and an adder (106) having an adder input looped back to its output via the shift register (105), an input for incrementing by one unit connected to the output of a first transition detector (103) to which the message is applied without delay, and an input for decrementing by one unit connected to the output of a second transition detector (104) to which the message is applied after a certain delay.

6. A circuit according to claim 3, adapted to an odd number p, characterized in that the count circuit comprises:
    totalizing means having
    a shift register with p stages (105) clocked by the timing signal (H),
    and an adder (106) having an adding input looped back to its output via the shift register (105), an input for incrementing by one unit connected to the output of a first transition detector (103) to which the message is applied without delay, and an input for decrementing by one unit connected to the output of a second transition detector (104) to which the message is applied with a certain delay,
    and computing means including
    a doubling circuit (102) connected to the output of the stage of rank (p+1)/2 of the shift register (105) in the totalizing means,
    a shift register (120) clocked by the timing signal ($H_1$)
    and an adder (121) having a first adding input looped back to its output via the first stage of the shift register (120) in the computing means, a second and a third adding input connected to the outputs of the first and last stages of the shift register (105) in the totalizing means and a subtracting input connected to the output of the doubling circuit (122).

7. A circuit according to claim 6, characterized in that the minimum detection means comprise:

two circuits for extracting the absolute value (123, 124) connected to the input of the shift register (120) in the computing means and the output of the p-th stage thereof respectively,

and a comparator (125) having two inputs which are connected to the circuits for extracting the absolute value to generate a clock initialisation signal each time the input value of the shift register (120) becomes lower in absolute values than the value which is present at the output of the p-th stage of that same register.

8. A circuit according to claim 6, adapted to an odd number p which is immediately greater than a multiple of four, characterized in that the doubt removing means comprise:

a comparator (126) having a zero threshold and being connected to the output of the stage of rank (p−1)/4 of the shift register (120) in the computing means and inhibiting the minimum detection means when a positive signal is applied thereto,

and a comparator (127) having a zero threshold and being connected to the output of the stage of rank (3p−1)/4 of the shift register (120) in the computing means and inhibiting the minimum detection means when a negative signal is applied thereto.

# FIG.1

# FIG.2

# FIG.3